# EUROPEAN PATENT SPECIFICATION

(11) **EP 3 791 156 B1**
(45) Date of publication and mention of the grant of the patent: **13.04.2022**
(21) Application number: 19742997.0
(22) Date of filing: 08.05.2019
(51) Int. Cl.: G01N 21/15, G02B 27/00, B08B 3/00

(54) **METHOD AND SYSTEM FOR CLEANING AN INLINE SENSOR**
VERFAHREN UND SYSTEM ZUR REINIGUNG EINES INLINE-SENSORS
PROCÉDÉ ET SYSTÈME DE NETTOYAGE DE CAPTEUR EN LIGNE

(30) Priority: 08.05.2018 NL 2020899
(43) Date of publication of application: 17.03.2021
(73) Proprietor: Nijhuis Water Technology B.V., 7007 CD Doetinchem (NL); Qsenz B.V., 1791 MD Den Burg (NL)
(72) Inventor: MENKVELD, Hendrik Willem Herman, 7007 CD Doetinchem (NL); HOLTERMAN, Menno-Martijn, 7007 CD Doetinchem (NL); RUIJTENBERG, Antonie, 7007 CD Doetinchem (NL); KEIJZER , Wilco Jacob Christiaan, 1791 MD Den Burg (NL); RITECO, Ewout Pieter, 1791 MD Den Burg (NL)
(74) Representative: Nederlandsch Octrooibureau
(86) International application number: PCT/NL2019/050274
(87) International publication number: WO 2019/216764

(56) References cited:
- WO-A1-2016/112291
- GB-A- 2 295 232
- US-A- 5 864 140
- US-A1- 2005 081 893

## Description

### Field of the invention

The present invention relates to a method for cleaning one or more substantially transparent windows of an inline optical sensor in in a flowcell. The invention further relates to a system comprising a flowcell and an inline optical sensor having one or more substantially windows arranged in the flowcell, wherein the sensor is arranged for inline measurement of an optical property of liquid flowing through the flowcell. The method and system are particularly suited to be used in processing plants for wastewater, e.g. sewage or industrial waste water that may be rich in proteins and fats.

### Background art

From US 4,385,936 a method is known for cleaning a process monitoring probe while it is inserted in a sample container through which flows a sample process stream, comprising the sequential steps of: injecting a supply of flushing water at a pressure between 20 and 60 psi (between about 1,4 and 4,1 atm) into said sample process stream; draining said flushing water and sample process stream; ceasing draining of said flushing water and sample process stream; discharging a jet of water from a nozzle at said inserted probe; injecting a chemical cleansing agent into the water to be discharged from the nozzle; ceasing injecting the supply of flushing water, ceasing discharging said jet of water and ceasing injecting the cleaning agent; resuming draining of said sample process stream, and providing sequential timer means for sequentially implementing these steps.

The known method uses a relatively large amount of cleaning liquid in order to clean the process monitoring probe. It is an object of the invention to provide a method and system for cleaning an inline optical sensor, which require less cleaning liquid.

US 5,866,140 describes a method of cleaning a channel in an apparatus for measuring the characteristics of a liquid by draining the liquid from the channel and moving a washing device having a spray head along it while spraying it with washing liquid.

### Summary of the invention

To this end, according to a first aspect, present invention provides a method for cleaning an inline optical sensor in a system which comprises: a flowcell comprising a chamber with an inlet and an outlet; one or more flushing channels which debouch in the chamber; wherein the sensor comprises one or more substantially transparent windows arranged in the chamber, the sensor being arranged for sensing an optical property of a liquid flowing through the chamber, the one or more substantially transparent windows being arranged for spacing a light source and/or a light detector of the sensor apart from the liquid flowing through the flowcell; wherein the method comprises the steps of: blocking flow of liquid through the inlet into the chamber; supplying air pressurized at a first air pressure to the chamber for substantially emptying the chamberfrom liquid; dispensing an amount of cleaning liquid, and using air pressurized at a second air pressure, vaporizing the amount of cleaning liquid to obtain a cleaning liquid/pressurized air mixture and delivering said mixture via the one or more flushing channels onto the one or more windows in the chamber; wherein the second air pressure is greater than ambient pressure and at least two times smaller than the first air pressure; letting the cleaning liquid from the mixture act on the one or more windows onto which the mixture has been delivered, for at least a predetermined amount of time; and flushing the chamber with hot water which has a temperature of at least 80 degrees Celsius. The ambient air pressure will typically substantially equal the atmospheric air pressure.

By first displacing liquid, e.g. influent of effluent of which an optical property is to be measured, in the chamber with the pressurized air and subsequently delivering the vaporized mixture of air and cleaning liquid onto the one or more windows of the sensor, a significantly lower amount of cleaning liquid is required for cleaning the one or more windows, in particular when compared to methods in which the chamber is flushed with a liquid to which cleaning liquid has been added, or in which the chamber is filled up with a cleaning liquid. Besides displacing the liquid from the chamber, at least a portion of any solid particles in the chamber and/or on the one or more windows of the sensor may also be removed by the stream of air at the first air pressure. Such solid particles are typically small enough to fit through a sieve which has a screen size of 1 mm.

Herein, by cleaning liquid/pressurized air mixture is meant the mixture of cleaning liquid and pressurized air in which the cleaning liquid has been vaporized. The step of dispensing the amount of cleaning liquid typically takes substantially less time than the step of vaporizing and delivering the liquid. For instance, dispensing the cleaning liquid may be carried out within a few microseconds, e.g. 300 microseconds, whereas vaporizing the cleaning liquid and delivering the mixture of droplets of cleaning liquid and pressurized air may take longer, e.g. between 2 and 5 seconds. By vaporizing the cleaning liquid, most of the liquid in the mixture can be delivered to the chamber, with only small amounts of liquid in the mixture being left behind in ducts leading to the chamber. The cleaning liquid is typically deposited on the one or more windows as a plurality of droplets. Thus, each droplet may adhere to a window of the sensor or any material that has built up on the window. If a continuous jet of cleaning liquid were used instead of the pressurized air/cleaning liquid for delivering cleaning liquid onto the window, much of the liquid in the jet would splash off the window without acting on the window.

The second air pressure typically lies in the range of 0,1 to 0,5 atm above ambient air pressure, and the first air pressure typically lies in the range of 2 - 7 atm above ambient air pressure. Thus, if ambient air pressure is 1 atm, the second air pressure will lie in the range of 1,1 to 1,5 atm, while the first air pressure will lie in the range of 3 - 8 atm. The ambient air pressure may differ from 1 atm, e.g. when the method is carried out at an elevation above sea level

By using a relative high first pressure for emptying the chamber from liquid it is ensured that substantially all of the liquid is removed from the chamber using, and by using a lower second pressure to deliver the mixture onto the one or more windows it is prevented that most of the mixture is blown off the one or more windows. The cleaning liquid from the mixture acts for at least the predetermined amount of time, e.g. for at least 15 second or for at least 30 seconds, on any material from the liquid that may have built up on the windows, such as grease, proteins, scaling and/or biofilm. During this predetermined amount of time, no further cleaning liquid is delivered onto the one or more windows.

Next, the cleaning liquid and material it has acted upon is subsequently flushed away from the one or more windows and from the flowcell by the hot water. It has been found that flushing with hot water of a temperature of at least 80 degrees Celsius results in effective removal of both cleaning liquid and material that has built up on the one or more windows. The duration of time the chamber is flushed with hot water is typically greater than 3 seconds but one third or less of the predetermined amount time the cleaning liquid acts on the one or more windows or material thereon. For instance, if the cleaning liquid acts on the one or more windows for 30 seconds, then the chamber may be flushed with hot water for about 6 seconds.

The volume of hot water used for flushing is typically a multiple of the internal volume of the chamber of the flowcell. The hot water is generally supplied to the flowcell via a different duct than the mixture.

In an embodiment the method comprises, during the step of flushing the chamber with hot water, supplying air pressurized at a third air pressure to the chamber, wherein the third air pressure is at least two times greater than the second air pressure. Thus, for a portion of the time that the chamber is flushed with hot water, air at the third air pressure is also supplied to the chamber. It has been found particularly effective to delay supply the air at the third air pressure to the chamber until the chamber has been substantially filled with hot water. This may be achieved for instance by delaying supply of the air at the third pressure by a fixed amount of time, e.g. 2 second or more, or 3 seconds, until after flushing of the chamber with hot water has started. Thus, if the chamber is flushed with hot water for a total of 6 seconds, then after the chamber has been flushed with hot water of 3 seconds the air pressurized at the third air pressure can be supplied to the chamber.

The air pressurized at the third air pressure may be supplied to the chamber via the same flushing channel as the through which the air pressurized at the first air pressure is supplied to the chamber, while the hot water is supplied to the chamber via a different flushing channel. When the supply of hot water to the chamber is stopped to end the step of flushing, the supply of the air at the third air pressure to the chamber is preferably stopped at substantially the same time.

In an embodiment the predetermined time is at least 20 seconds, preferably 30 seconds or more. In an embodiment the predetermined time last longer than the remaining steps of the method for cleaning.

In an embodiment, the chamber of the flowcell has an internal volume for the liquid of which the optical property is to be measured, and the amount of cleaning liquid that is dispensed has a volume of less than one third of the internal volume of the chamber, preferably between one tenth and one fortieth of the internal volume, more preferably between one fifth and one twentieth of the internal volume. For instance, the chamber may have an internal volume of between 50 - 80 ml, then the amount of liquid that is dispensed has a volume, prior to vaporization of said amount, of less than one fifth of the internal volume.

In an embodiment the amount of cleaning liquid that is dispensed to be vaporized for obtaining the cleaning liquid/pressurized air mixture has a volume of 10 ml or less, preferably 5 ml or less, more preferably between 1 and 3 ml.

In an embodiment the second air pressure is at least four times smaller than the first air pressure. In this manner, the chamber can be drained using the first air pressure, e.g. of 4 atm or more above ambient air pressure, while avoiding that the mixture is blown past the at least one window a higher air.

In an embodiment the mixture that is delivered into the chamber contains a greater amount of air by weight than cleaning liquid by weigh. Preferably, the mixture that is delivered into the chamber has a ratio by weight of 3:2 or less of pressurized air to cleaning liquid.

In an embodiment the optical sensor is an optical spectrometer comprising a housing, and further comprising a light source and a light detector arranged within the housing, wherein the one or more windows comprise a transmitting window and a receiving window which are arranged in the housing and wherein the receiving window is spaced apart from the receiving window along a specified path length such that light emitted from the light source can pass through the transmitting windows, through the liquid to be examined and through a receiving window to the detector. The transmitting and receiving window typically face each other and are typically spaced apart from each other by a gap though which the liquid may flow. The spectrometer may for instance be a UV or IR spectrometer, or a spectrophotometer as described in WO 2012/051637A1 which is hereby incorporated in its entirety.

In an embodiment the hot water and the mixture are provided to the chamber via separate flushing channels, wherein the flushing channel for the hot water has a larger inner diameter than the flushing channel for the mixture. For instance, the first flushing channel may have an inner diameter smaller than the length of the gap between the two windows, and the second flushing channel may have an inner diameter of at least 4 times greater than the inner diameter of the first flushing channel.

In an embodiment the one or more flushing channels comprise a first flushing channel which debauches in the chamber at a position facing at least one of the one or more windows, for directing the mixture and / or air pressurized at the first air pressure onto the one or more windows. For instance, a single flushing channel may debouch in an opening in a gap between the transmitting window and the receiving window of the sensor. Alternatively, the first flushing channel debauching in the chamber at two separate openings, one opening arranged for delivering air and/or the mixture of cleaning liquid and air onto the transmitting window, and the other opening arranged for delivering air and/or the mixture of cleaning liquid and air onto the receiving window.

The first flushing channel preferably extends through a portion of the housing of the sensor.

In an embodiment the one or more flushing channels comprise a second flushing channel, separate from the first flushing channel, wherein the second flushing channel debauches in the chamber for supplying the hot water to the chamber. As the amount of hot water that is to be flushed through the chamber is much larger than the amount of cleaning liquid that is to be delivered onto the one or more windows, it is preferred that the diameter of the second flushing channels is larger than the diameter of the first flushing channel, e.g. by a factor 4 or more.

In an embodiment, during the emptying of the chamber from liquid, delivery of the mixture to the chamber and flushing of the chamber with hot water, the flowcell remains in a same position with respect to the sensor as when liquid to be measured flows through the chamber. During cleaning, the flowcell does not need to be opened up to allow access to the one or more windows of the sensor. The flowcell can thus remain attached around the one or more windows and the inlet and outlet of the chamber can each maintain a fluid tight connection with the one or more inlet ducts and/or one or more drain ducts for the liquid of which an optical property is to be measured.

In an embodiment, during the emptying of the chamber from liquid, delivery of the mixture to the chamber and flushing of the chamber with hot water, the chamber remains fluid tight except for at the inlet, the outlet and the one or more flushing channels.

In an embodiment the cleaning liquid comprises a degreasing liquid, an acid solution and/or an alkaline solution.

In an embodiment the chamber comprises one or more walls which face the interior of the chamber and together define the interior volume of the chamber, wherein during cleaning of the chamber and/or measurement of an optical property of the liquid in the chamber, said one or more walls all remain in a same position and orientation. The chamber can thus be constructed free from moving parts, which is particularly desirable as such moving part might otherwise also have to be cleaned. Preferably, the sensor, at least that part of the sensor which is arranged within the interior volume of the chamber, is also free from moving parts during cleaning and/or measurement.

According to a second aspect, the present invention provides a system for inline measurement of an optical property of a liquid, the system comprising: a flowcell comprising a chamber with an inlet and an outlet for the liquid; an optical sensor comprising at least one substantially transparent window that is arranged in the chamber, the sensor being arranged for sensing an optical property of the liquid flowing through the chamber and wherein said at least one substantially transparent window is arranged for spacing a light source and/or a light detector of the sensor apart from the liquid flowing through the flowcell; the system further comprising one or more flushing channels which debouch in the chamber, wherein a first flushing channel of said one or more flushing channels debouches in the chamber at a positing facing the at least one substantially transparent window; a source of pressurized air, selectively connectable to said first flushing channel via a duct; a cleaning liquid dispensing apparatus arranged for dispensing an amount of cleaning liquid into the duct, one or more inlet ducts connected to the inlet of the flowcell; one or more controllable inlet valves arranged for allowing or blocking flow of liquid of which the optical property is to be measured from the one or more inlet ducts into the flowcell; an first drain duct connected to the outlet of the flowcell and arranged for transport of liquid from the flowcell to out of the system; a controller for switching the system between an inline measuring mode and a cleaning sequence, wherein the controller is adapted for:
when switching to the inline measuring mode, controlling at least one of said inlet valves to open to allow liquid to flow from one of said one or more inlets ducts, through the inlet of the flowcell and past said at least one transparent window, and subsequently through the first drain duct, for enabling inline measurement of the optical property of the liquid using the optical sensor;
when switching to the cleaning sequence, controlling all of the at least one inlet valves to close, controlling the source of pressurized air to supply air pressurized at a first pressure to the chamber for substantially emptying the chamber from liquid, controlling the cleaning liquid dispensing apparatus to subsequently dispense an amount of cleaning liquid into the duct, and controlling the source of pressurized air to supply air pressurized at a second air pressure to vaporize the cleaning liquid in the duct to obtain a cleaning liquid/pressurized air mixture and deliver the mixture to the chamber (61) onto the one or more windows, wherein the second air pressure (P2) is greater than ambient pressure and at least two times smaller than the first air pressure.

The system according to the invention thus allows automated cleaning of the one or more windows of the sensor, wherein only small amounts of cleaning liquid are required for each cleaning sequence. Preferably, the controller is further adapted for controlling the system to carry out the steps of the method of the invention as described herein during the cleaning sequence.

In an embodiment the system further comprises a hot water supply hot for supplying hot water at a temperature of at least 80 degrees Celsius, wherein the controller is further adapted for, during the cleaning sequence and after delivering the mixture onto the one or more windows: letting the cleaning liquid from the mixture act on the one or more windows of the optical sensor for at least a predetermined time; and flushing the chamber with hot water from the hot water supply that is delivered to the chamber via a second flushing channel of the one or more flushing channels. Thus after the cleaning liquid has acted on the one or more windows, e.g. for a predetermined time of at least 20 seconds, e.g. between 20 and 60 seconds, the cleaning liquid is flushed out of the chamber by the hot water. The second flushing channel is typically separate from the first flushing channel, and preferably has an inner diameter at least 4 times greater than an inner diameter of the first flushing channel.

In an embodiment the sensor is an optical spectrometer arranged in the flowcell, wherein the one or more windows in the housing comprise a transmitting window and a receiving window spaced apart from the transmitting window along a specified path length such that light emitted from the light source can pass through the transmitting window, through the liquid to be examined and through the receiving window to the detector, and wherein the first flushing channel debouches in the chamber and faces the transmitting window and/or the receiving window. The flushing channels will typically extend at least partially through the housing of the sensor.

In an embodiment the system comprises a watersource and a heating unit which comprises a tank for receiving water from the water source and a heating element for heating the water in the tank to a temperature of at least 80 degrees Celsius, wherein the second flushing channel is connected to the tank, e.g. via a duct, for receiving the hot water from the tank, and wherein a controllable valve is provided between the tank and the second flushing channel. The controller is adapted for controlling the valve to be in the open position when the chamber is to be flushed with the hot water, and to otherwise be in the closed position. The heating unit may for instance be a boiler having an inlet connected to the water source and an outlet connected, e.g. via a duct, to the second flushing channel.

In an embodiment the system comprises a water supply duct which connects the water source to the duct via which the source of pressurized air is connected to the first flushing channel, wherein a controllable valve is arranged in the water supply duct, and wherein the controller is adapted for opening said valve following the predetermined amount of time during which the mixture acts on the one or more windows. The water from the water source, which typically has not been heated, thus flushed the duct from cleaning liquid, in this manner preventing corrosion of the duct.

In an embodiment the system further comprises a second drain duct connected to the first drain duct and to the inlet of the flowcell, wherein a drain valve is arranged between the inlet of the flowcell and the second drain duct, and wherein the controller is adapted for closing the drain valve when switching to the measuring mode, and for opening the drain valve when switching to the cleaning sequence. Thus, when the system is in the cleaning mode, liquid can drain from the flowcell through the first and/or second drain duct.

### Short description of drawings

The present invention will be discussed in more detail below, with reference to the attached drawings, in which
Fig. 1 shows schematic diagram of a system of according to the present invention;
Fig. 2 shows a front view of such a system;
Figs. 3A and 3B shows details of a sensor and flowcell for use with the invention;
Fig. 3C shows a schematical diagram of a sensor for use with the invention.
Fig. 4 shows a flowchart of a method according to the present invention.

### Description of embodiments

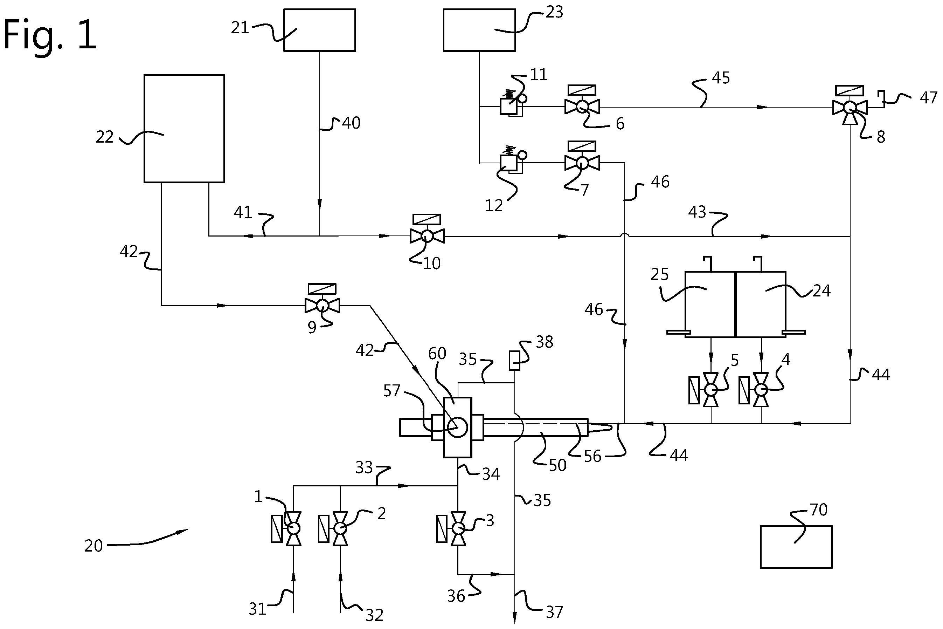

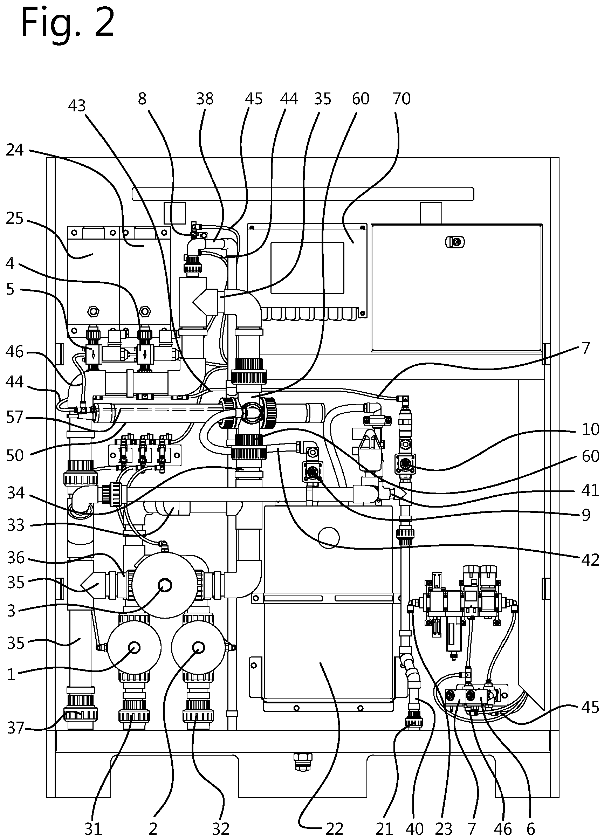

Fig. 1 and 2 respectively show a schematic diagram of a system 20 according to the present invention for inline measurement of a property of a liquid, and a front view thereof. The system comprises inlet ducts 31, 32 respectively for liquid influent and liquid effluent of which an optical property is to be measured by an optical inline sensor 50, typically an optical spectrometer. The inlet duct 31 for influent is typically connected to an inlet of a water treatment system for substantially untreated water, and the inlet duct 32 of effluent is typically connected to an outlet of such a water treatment system through which water flows that has been treated by the treatment systems. The two inlet ducts 31, 32 join a further duct 33 that is in fluid connection, via duct 34, with a flowcell 60 that has a chamber inside of which one or more substantially transparent windows of the optical sensor 50 are arranged. Liquid that has flowed through the chamber of the flowcell 60 flows on via an outlet of the flowcell and a first drain pipe 35 that is connected to the outlet, to a drain 37 which may be connected to the water treatment system.

For enabling a selection between whether a property of liquid influent is to be measured or a property of liquid effluent is to be measured, remote controllable valves 1, 2 are arranged in inlet ducts 31, 32 and are connected to controller 70. The controller is here shown schematically, and is adapted for controlling the each of controllable valves 1-7, 9 and 10 of the system to move between an open position and a closes position, and for controlling three way valve 8. Herein, the phrases "the valve is opened", "the valve is closed", and "the valve is moved to a position" or the like, when referring to any one of valves 1-10, should all be understood to mean that the valve is controlled to do so by the controller 70.

In the example shown, valve 2 is in the closed position while valve 1 is in the open position to allow inline measurement of a property of the liquid influent that is supplied through influent inlet duct 31. The controller 70 is adapted for controlling the valves 1 and 2 such that - when the system is in an online measuring mode - only one of these valves is open at a time, and such that valve 3, which is connected to duct 34 on an end of the duct that is spaced apart from the flowcell 60, is closed. Thus, during the measurement mode, liquid from either the inlet duct 31 for influent or from the inlet duct for effluent flows via ducts 33, 34, through the flowcell 60 and past the sensor 50, and subsequently to the drain 37 via first drain pipe 35. A vent 38 is provided in the first drain pipe 35 to release excess pressure in fluid in the drain pipe 35.

Upon receipt of a suitable trigger signal, the controller 70 switches the system from the inline measuring mode to a cleaning sequence. The trigger signal may for instance be triggered periodically after a predetermined amount of time and/or after a predetermined number of measurements have been carried out without a cleaning sequence. The cleaning sequence comprises closing both valves 1,2 and opening valve 3, so that liquid can flow out of the chamber of flowcell 60, through valve 3 and via both the first drain pipe 35 and via a second drain pipe 36 to the drain 37.

Next, as an optional step of the cleaning sequence, the chamber may be flushed with hot water. The system is provided with a heating unit 22 which receives water from a water source via ducts 40, 41 and heats the water to a temperature of at least 80 degrees Celsius. In order to supply hot water from the heating unit 22 to the chamber, valve 9 may be opened, e.g. for a predetermined amount of time of between 3 to 10 seconds, so that the hot water is supplied via duct 42 to the chamber of the flowcell 60, after which valve 9 is closed again.

Regardless of whether this optional step has been performed, as a next step, in order to ensure substantially all liquid is drained from the flowcell, valve 7 is opened and pressurized air at an air pressure greater than or equal to a first air pressure is supplied from pressurized air source 23, via air duct 46 and to flushing channel 56 which extends through the sensor 50 and debouches in the flowcell 60. If the optional step of first flushing the chamber with hot water has been omitted, then the liquid that is displaced from the chamber by the pressurized will consist substantially of influent or effluent from the chamber. Otherwise, if the optional step of flushing the chamber with hot water has been carried out during the sequence, the hot water will have flushed most of the influent or effluent from the chamber, and the liquid that is displaced by the pressurized air will mostly consist of the water supplied from the heating unit 22.

The first air pressure is greater than 4 atm above ambient air pressure, though the source 23 may be adapted for providing air at a pressure larger than the first air pressure. An air pressure regulator 12 is therefore provided between the valve 7 and the source 23, for maintaining the air through the valve 7 substantially at the first air pressure when valve 7 is open.

Once the chamber of the flowcell 60 has substantially been cleared from liquid by the pressurized air, valve 7 is closed again. Air pressure within the duct 44 may be reduced to be substantially equal to ambient air pressure, by controlling three-way valve 8 to temporarily move from a position in which it connects duct 44 to duct 45, to a position in which to connects duct 44 to the ambient air 47. Typically, placing the duct 44 in fluid connection with the ambient air, e.g. atmospheric air, for a small amount of time, e.g. between 0,2 and 1 second, is enough to lower the pressure in the duct to ambient pressure.

Next, cleaning liquid dispensing apparatus 24 and/or cleaning liquid dispensing apparatus 25 are controlled to dispense an amount of cleaning liquid in the duct 44, the total amount of cleaning liquid that is dispensed in the duct typically having a volume in the range of 1 - 5 ml. Dispensing apparatus 24 contains a liquid degreasing agent, and dispensing apparatus 25 contains an acid in liquid form, such as an hydrochloric acid solution.

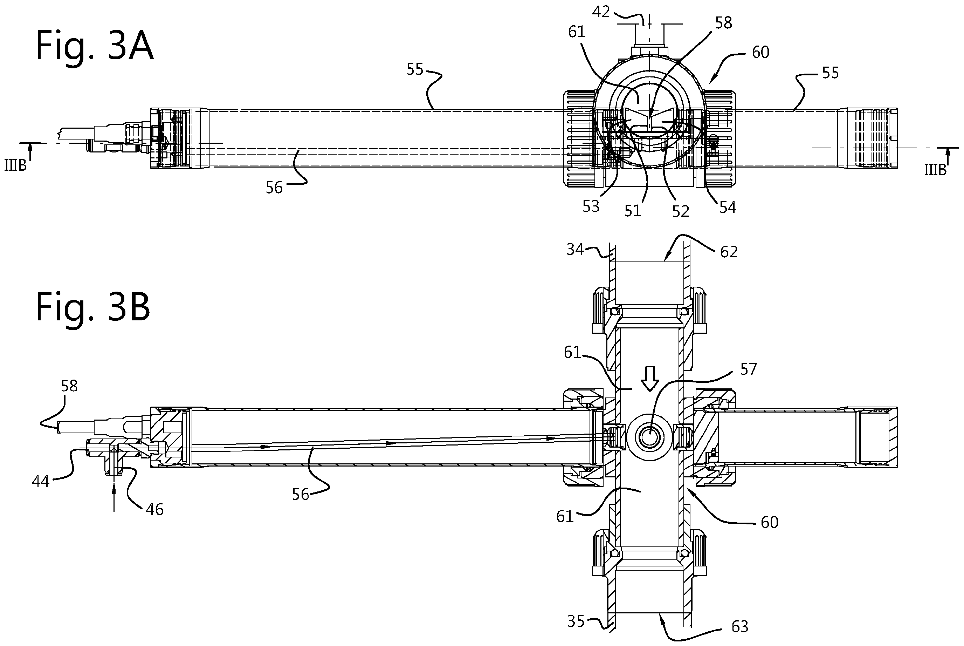

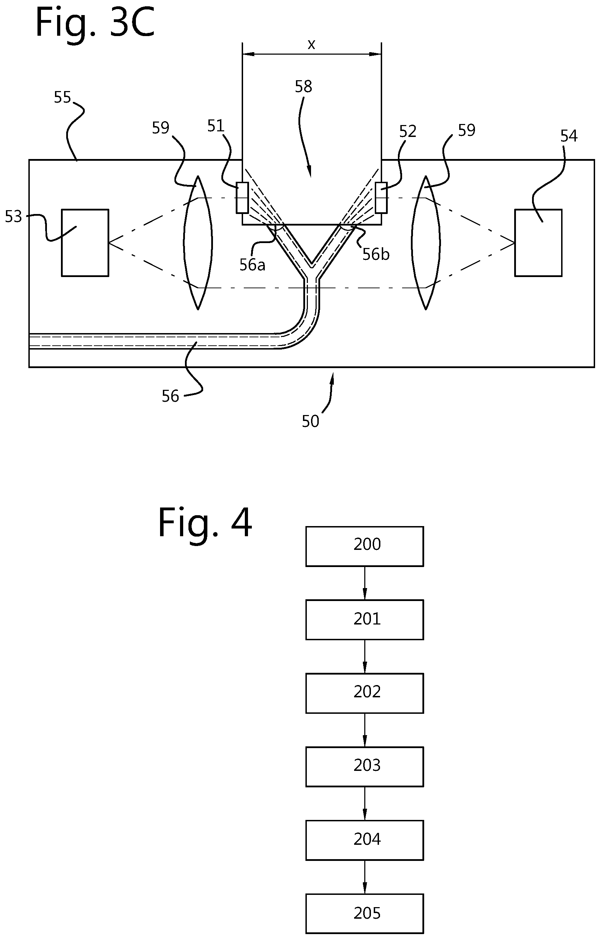

In the embodiment shown, the amount of cleaning liquid is dispensed by temporarily opening pinch valve 4 and/or pinch valve 5 of the dispensing apparatuses 24, 25. The pinch valves, when open, typically have an inner diameter of 1,2 mm or less, e.g. 1 mm in order to accurately dispense small amounts, such as 1 - 3 ml, of cleaning liquid. When the amount of cleaning liquid has been deposited in the duct 44, valve 6 is opened to supply air at a second air pressure to the duct 44. The source 23 of pressurized air provides this air, with air pressure regulator 11 that is arranged between the source 23 and valve 6 adapted for maintaining the air pressure through the valve 6 at the second air pressure when the valve 6 is open. The second air pressure is lower than the first air pressure, though still above ambient pressure, and in the example shown is about 0,5 atm above ambient air pressure. This has been found to provide sufficient air flow for vaporizing the cleaning liquid in the duct 44 and delivering the resulting mixture of cleaning liquid and pressurized air onto the one or more transparent windows of the sensor via the first flushing channel 56 that debouches in the chamber of the flowcell and is connected to the duct 44. This second air pressure was also found to be low enough to prevent the mixture from being blown off the one or more transparent windows of the sensor. Though not shown in Fig. 1, the first flushing channel debouches in the chamber at a position facing the one or more transparent windows of the sensor, so that the mixture is delivered onto the one or more transparent windows. An example of a sensor with such a first flushing channel will be described in more detail with reference to Fig. 3.

As a next step of the cleaning sequence, valve 6 is closed and the cleaning liquid that has been delivered onto the one or more windows is allowed to act for a predetermined amount of time of at least 15 second, preferably about 30 second or more. During this time no further pressurized air is supplied to the chamber.

After the predetermined amount has passed, valve 9 is opened and hot water is supplied from the heating unit 22 to the chamber to via duct 42 and second flushing channel 57 connected thereto which debouches in the chamber. The valve is opened for a predetermined amount of time, e.g. between 2 - 10 second, during which hot water flushes the cleaning liquid and any material still remaining on the one or more windows of the censor out of chamber of the flowcell via first drain ducts 35 and or via second drain duct 36 to the drain 37

Figs. 3A and 3B show respectively a schematically show a cross-sectional side view of a flowcell 60 as may be used with the invention, and a cross-section through plane IIIB thereof. The flowcell 60 comprises chamber 61 with an inlet 62 and an outlet 63 to liquid of which an optical property is to be measured. Such a liquid can flow, via inlet 62 of the chamber, into the chamber 61 and subsequently out of the chamber via outlet 63, during which a portion of the liquid passed through a gap 58 that is defined between transmitting window 51 and receiving window 52 of the sensor.

Fig. 3C schematically shows the sensor 50, with the light source 53 arranged for transmitting light through lens 59 and transmitting window 51 to receiving windows 52. The transmitting windows and receiving window are spaced apart by a gap 58 having a length x of about 0,5 mm, though the sensor could be constructed such that the gap has another length, e.g. in the range of0,3 mm - 35 mm. When liquid of which an optical property is to be measured flows through the gap 58, light emitted by the light source 53 passed through the liquid and through receiving window 52 and lens 59 and onto light detector 59 which detects properties of light incident thereon. In the example shown, no liquid of which an optical property is to be measured passes between the windows 51, 52. Instead, the gap has been substantially cleared from such liquid using pressurized air supplied through duct 56 which has ends 56a, 56b which debouch in the gap at respective positions facing the windows 51, 52. Fig. 3C shows the sensor 50 as a mixture of pressurized air and cleaning liquid is being sprayed onto the windows 51, 52. As described above, the air pressure used for vaporizing the cleaning liquid is lower than the air pressure that was used for clearing the gap, as well as the chamber of the flowcell in which the gap is arranged, from the liquid of which the optical property is to be measured.

Fig. 4 shows a flow chart of a method according to the invention. The method starts with a step 200 of blocking flow of liquid of which an optical property is to be measured, into the chamber of the flowcell. This may be done by closing valves in the inlet ducts connected to the inlet of the chamber. Once flow of the liquid into the chamber is blocked, and optionally a drain valve in a second drain duct that is connected to the inlet ducts has been opened, in step 201 air is supplied to the chamber for substantially emptying the chamber from any liquid that may still be present therein. This liquid can exit the chamber via the outlet of the chamber, and in case the drain valve in the second duct has been opened, also via the inlet of the chamber. In order to clear the chamber from liquid, the air is supplied to the chamber at a first air pressure that is above ambient air pressure, e.g. at 4 atm or more, via a first flushing channel. Once the chamber has been substantially cleared of liquid, the supply of air at the first air pressure is stopped, and in step 202 an amount of cleaning liquid is deposited in a duct that is connected to the first flushing channel. The volume of the amount of cleaning liquid that is deposited is less than the internal volume of the chamber, and is for instance about 10 ml or less. During the dispensing, the air in the duct is preferably substantially equal to atmospheric pressure, which may be achieved by letting out any over pressure in the duct prior to dispensing the liquid, e.g. by opening a valve, such as a three way valve in the duct, to connect the duct to the ambient air. During or after dispensing of the amount of cleaning liquid in the duct, pressurized air at a second air pressure is supplied to the duct, so that the cleaning liquid is vaporized in step 203 and a mixture of individual droplets of cleaning liquid and pressurized air is delivered to the chamber onto one or more windows of the sensor which are arranged in the chamber. In step 204, the cleaning liquid from the mixture that has been delivered onto the one or more windows is allowed to act on the one or more windows for a predetermined amount of time. During this predetermined amount of time, which may last for instance 15 second or more, or 30 second or more, but typically less than 1 minute, preferably no further pressurized air and/or liquid, such as water, is delivered to the chamber, so that dilution of the mixture during this time is prevented. Step 204 typically takes more time than steps 200,201,202 and 205 combined.

After the predetermined amount of time has ended, the chamber is flushed in step 205 with hot water at a temperature of at least 80 degrees Celsius, for flushing the cleaning liquid and any material, such as scale, grease and/or protein that has built up on the one or more windows out of the chamber. In order to ensure sufficient flow of hot water, the hot water is preferably supplied to the chamber via a second flushing channel which has a greater diameter than the first flushing channel.

The present invention has been described above with reference to a number of exemplary embodiments as shown in the drawings. Modifications and alternative implementations of some parts or elements are possible, and are included in the scope of protection as defined in the appended claims.

## Claims

1. A method for cleaning an inline optical sensor (50) in a system (20) which comprises:
a flowcell (60) comprising a chamber (61) with an inlet (62) and an outlet (63);
one or more flushing channels (56, 57) which debouch in the chamber;
wherein the sensor (50) comprises one or more substantially transparent windows (51, 52) arranged in the chamber (61), the sensor being arranged for sensing an optical property of a liquid flowing through the chamber, the one or more substantially transparent windows (51, 52) being arranged for spacing a light source (53) and/or a light detector (54) of the sensor apart from the liquid flowing through the flowcell (60);
**characterized in that** the method comprises the steps of:
blocking (200) flow of liquid through the inlet (62) into the chamber (61);
supplying (201) air pressurized at a first air pressure (P1) to the chamber for substantially emptying the chamber from liquid; and
dispensing (202) an amount of cleaning liquid, and using air pressurized at a second air pressure (P2), vaporizing (203) said amount of cleaning liquid to obtain a cleaning liquid/pressurized air mixture and delivering said mixture via the one or more flushing channels onto the one or more windows (51,52) in the chamber;
wherein the second air pressure (P2) is greater than ambient pressure and at least two times smaller than the first air pressure (P1);
letting (204) the cleaning liquid from the mixture act on the one or more windows onto which the mixture has been delivered, for at least a predetermined amount of time; and
flushing (205) the chamber (60) with hot water which has a temperature of at least 80 degrees Celsius.

2. Method according to claim 1, wherein the chamber of the flowcell (60) has an internal volume for the liquid (L) of which the optical property is to be measured, wherein the amount of cleaning liquid that is dispensed has a volume of less than one third of the internal volume of the chamber, preferably between one fifth and one twentieth of the internal volume.

3. Method according to claim 1 or 2, wherein the amount of cleaning liquid that is dispensed to be vaporized for obtaining the cleaning liquid/pressurized air mixture has a volume of less than 10 ml, preferably 5 ml or less, more preferably between 1 and 3 ml.

4. Method according to claim 1, 2 or 3, wherein the second air pressure (P2) is at least four times smaller than the first air pressure (P1), preferably at least 5 times smaller.

5. Method according to any one of the preceding claims, wherein the mixture that is delivered into the chamber contains a greater amount of air by weight than cleaning liquid, preferably wherein the mixture that is delivered into the chamber has a ratio by weight of 3:2 or less of pressurized air to cleaning liquid.

6. Method according to any one of the preceding claims, comprising, during the step of flushing the chamber with hot water, supplying air pressurized at a third air pressure to the chamber, wherein the third air pressure is at least two times greater than the second air pressure.

7. Method according to any one of the preceding claims, wherein the sensor is an optical spectrometer comprising a housing (55), a light source (53) and a light detector (54) arranged within the housing, wherein the one or more windows comprise a transmitting window (51) and a receiving window (52) which are arranged in the housing and wherein receiving window is spaced apart from the transmitting window along a specified path length (d) such that light emitted from the light source can pass through the transmitting windows, through the liquid to be examined and through a receiving window (52) to the detector (54).

8. Method according to any one of the preceding claims, wherein the one or more flushing channels comprise a first flushing channel (56) which debauches in the chamber at a position facing at least one of the one or more windows (51, 52) for directing the mixture and / or air pressurized at the first air pressure onto the one or more windows,
preferably wherein the one or more flushing channels comprise a second flushing channel, separate from the first flushing channel, wherein the second flushing channel debauches in the chamber for supplying the hot water to the chamber.

9. Method according to any one of the preceding claims, wherein during the emptying of the chamber from liquid, delivery of the mixture to the chamber and flushing of the chamber with hot water, the flowcell remains in a same position with respect to the sensor as when liquid to be measure flows through the chamber.

10. Method according to any one of the preceding claims, wherein during the predetermined amount of time, substantially no further mixture is delivered onto the one or more windows.

11. Method according to any one of the preceding claims, wherein the hot water and the mixture are provided to the chamber via separate flushing channels, wherein the flushing channel for the hot water has a larger inner diameter than the flushing channel for the mixture.

12. System (20) for inline measurement of an optical property of a liquid, the system comprising:
a flowcell (60) comprising a chamber (61) with an inlet (62) and an outlet (63) for the liquid;
an optical sensor (50) comprising at least one substantially transparent window (51,52) that is arranged in the chamber (61), the sensor being arranged for sensing an optical property of the liquid flowing through the chamber and wherein said at least one substantially transparent window (51,52) is arranged for spacing a light source (53) and/or a light detector (54) of the sensor apart from the liquid flowing through the flowcell (60); and
one or more flushing channels (56,57) which debouch in the chamber, wherein a first flushing channel (56) of said one or more flushing channels debouches in the chamber at a position facing the at least one substantially transparent window (51,52);
**characterized in that** the system further comprises:
a source (24) of pressurized air, selectively connectable to said first flushing channel (56) via a duct (44);
a cleaning liquid dispensing apparatus (24,4; 25,5) arranged for dispensing an amount of cleaning liquid into the duct (44),
one or more inlet ducts (31,32) connected to the inlet of the flowcell (60);
one or more controllable inlet valves (1,2) arranged for allowing or blocking flow of liquid of which the optical property is to be measured from the one or more inlet ducts (31,32) into the flowcell;
a first drain duct (35) connected to the outlet of the flowcell and arranged for transport of liquid from the flowcell to out of the system;
a controller (70) for switching the system between an inline measuring mode and a cleaning sequence, wherein the controller is adapted for:
when switching to the inline measuring mode, controlling at least one of said inlet valves (1,2) to open to allow liquid to flow from one of said one or more inlets ducts (31,32), through the inlet of the flowcell and past said at least one transparent window, and subsequently through the first drain duct (35), for enabling inline measurement of the optical property of the liquid using the optical sensor;
when switching to the cleaning sequence, controlling all of the at least one inlet valves (1,2) to close, controlling the source of pressurized air to supply air pressurized at a first pressure (P1) to the chamber for substantially draining the chamber, controlling the cleaning liquid dispensing apparatus to subsequently dispense an amount of cleaning liquid into the duct (44), and controlling the source of pressurized air to supply air pressurized at a second air pressure (P2) to vaporize the cleaning liquid in the duct (44) to obtain a cleaning liquid/pressurized air mixture and deliver the mixture to the chamber (61) onto the one or more windows, wherein the second air pressure (P2) is greater than ambient pressure and at least two times smaller than the first air pressure (P1).

13. System according to claim 12, further comprising a hot water supply hot for supplying hot water at a temperature of at least 80 degrees Celsius, wherein the controller is further adapted for, during the cleaning sequence and after delivering the mixture onto the one or more windows:
letting the vaporised cleaning liquid (C) act on the one or more windows (51,52) of the optical sensor (50) for at least a predetermined time; and
flushing the chamber (60) with hot water from the hot water supply that is delivered to the chamber via a second flushing channel (57) of said one or more flushing channels.

14. System according to claim 12 or 13, wherein the sensor is an optical spectrometer (50) arranged in the flowcell (60), wherein the one or more windows in the housing comprise a transmitting window (51) and a receiving window (52) spaced apart from the transmitting window (51) along a specified path length (d) such that light emitted from the light source can pass through the transmitting window, through the liquid to be examined and through the receiving window (52) to the detector, and wherein the first flushing channel (56) debouches in the chamber and faces the transmitting window (51) and/or the receiving window (52).

15. System according to any one of claims 12-14, further comprising a second drain duct (36) connected to the first drain duct (35) and to the inlet of the flowcell, wherein a drain valve (3) is arranged between the inlet of the flowcell and the second drain duct, and wherein the controller is adapted for closing the drain valve when switching to the measuring mode, and for opening the drain valve when switching to the cleaning sequence.

## Patentansprüche

1. Verfahren zum Reinigen eines optischen Inline-Sensors (50) in einem System (20), welches aufweist:
eine Durchflusszelle (60) mit einer Kammer (61) mit einem Einlass (62) und einem Auslass (63),
einen oder mehrere Spülkanäle (56, 57), die in die Kammer münden,
wobei der Sensor (50) ein oder mehrere in der Kammer (61) angeordnete, im Wesentlichen transparente Fenster (51, 52) aufweist, wobei der Sensor dazu ausgestaltet ist, um eine optische Eigenschaft einer durch die Kammer fließenden Flüssigkeit zu erfassen, wobei das eine oder die mehreren im Wesentlichen transparenten Fenster (51, 52) so angeordnet sind, um eine Lichtquelle (53) und/oder einen Lichtdetektor (54) des Sensors auf Abstand zu der durch die Durchflusszelle (60) fließenden Flüssigkeit zu halten,
**dadurch gekennzeichnet, dass** das Verfahren die Schritte aufweist:
Blockieren (200) des Durchflusses von Flüssigkeit durch den Einlass (62) in die Kammer (61),
Zufuhr (201) von Druckluft mit einem ersten Luftdruck (P1) in die Kammer, um die Kammer im Wesentlichen von Flüssigkeit zu entleeren, und
Abgabe (202) einer Menge von Reinigungsflüssigkeit und Verwenden von Druckluft mit einem zweiten Luftdruck (P2), Verdampfen (203) der Menge von Reinigungsflüssigkeit, um ein Reinigungsflüssigkeit/Druckluft-Gemisch zu erhalten, und Zuführen des Gemisches über den einen oder die mehreren Spülkanäle auf das eine oder die mehreren Fenster (51, 52) in der Kammer,
wobei der zweite Luftdruck (P2) größer als der Umgebungsdruck und wenigstens zweimal kleiner als der erste Luftdruck (P1) ist,
Einwirkenlassen (204) der Reinigungsflüssigkeit aus dem Gemisch auf das eine oder die mehreren Fenster, auf die das Gemisch ausgegeben worden ist, für wenigstens eine vorbestimmte Zeitspanne und
Spülen (205) der Kammer (60) mit heißem Wasser mit einer Temperatur von wenigstens 80°C.

2. Verfahren nach Anspruch 1, wobei die Kammer der Durchflusszelle (60) ein inneres Volumen für die Flüssigkeit (L) hat, deren optische Eigenschaft zu messen ist, wobei die Menge von Reinigungsflüssigkeit, die ausgegeben wird, ein Volumen hat, das weniger als ein Drittel des inneren Volumens der Kammer beträgt, vorzugsweise zwischen einem Fünftel und einem Zwanzigstel des inneren Volumens.

3. Verfahren nach Anspruch 1 oder 2, wobei die Menge von Reinigungsflüssigkeit, die ausgegeben wird, um verdampft zu werden, um das Reinigungsflüssigkeit/Druckluft-Gemisch zu erhalten, ein Volumen von weniger als 10 ml, vorzugsweise 5 ml oder weniger, und besonders bevorzugt zwischen 1 und 3 ml hat.

4. Verfahren nach Anspruch 1, 2 oder 3, wobei der zweite Luftdruck (P2) wenigstens viermal kleiner als der erste Luftdruck (P1) ist, vorzugsweise wenigstens fünfmal kleiner.

5. Verfahren nach einem der vorhergehenden Ansprüche, wobei das Gemisch, das der Kammer zugeführt wird, in Bezug auf das Gewicht eine größere Menge Luft als Reinigungsflüssigkeit enthält, vorzugsweise wobei das in die Kammer gelieferte Gemisch in Bezug auf das Gewicht ein Verhältnis von 3:2 oder weniger von Druckluft zu Reinigungsflüssigkeit hat.

6. Verfahren nach einem der vorhergehenden Ansprüche, bei dem während des Schrittes des Spülens der Kammer mit heißem Wasser der Kammer Druckluft mit einem dritten Luftdruck zugeführt wird, wobei der dritte Luftdruck wenigstens zweimal größer als der zweite Luftdruck ist.

7. Verfahren nach einem der vorhergehenden Ansprüche, wobei der Sensor ein optisches Spektrometer mit einem Gehäuse (55), einer Lichtquelle (53) und einem Lichtdetektor (54) ist, die in dem Gehäuse angeordnet sind, wobei das eine oder die mehreren Fenster ein übertragendes Fenster (51) und ein aufnehmendes Fenster (52) aufweisen, die in dem Gehäuse angeordnet sind, und wobei das aufnehmende Fenster auf Abstand entlang einer spezifizierten Weglänge (d) zu dem übertragenden Fenster angeordnet ist, so dass das von der Lichtquelle emittierte Licht durch das übertragende Fenster, durch die zu untersuchende Flüssigkeit und durch ein aufnehmendes Fenster (52) zu dem Detektor (54) passieren kann.

8. Verfahren nach einem der vorhergehenden Ansprüche, wobei der eine oder die mehreren Spülkanäle einen ersten Spülkanal (56) umfassen, der an einer Position in die Kammer mündet, die wenigstens einem von dem einen oder den mehreren Fenstern (51, 52) zugewandt ist, um das Gemisch und/oder Druckluft mit dem ersten Luftdruck auf das eine oder die mehreren Fenster zu richten,
wobei der eine oder die mehreren Spülkanäle vorzugsweise einen zweiten, von dem ersten Spülkanal separaten Spülkanal umfassen, wobei der zweite Spülkanal an einer Position in die Kammer mündet, um der Kammer das heiße Wasser zuzuführen.

9. Verfahren nach einem der vorhergehenden Ansprüche, wobei während der Entleerung der Kammer von Flüssigkeit, der Zufuhr des Gemisches in die Kammer und des Spülens der Kammer mit heißem Wasser die Durchflusszelle an derselben Position in Bezug auf den Sensor bleibt, als wenn zu messende Flüssigkeit durch die Kammer fließt.

10. Verfahren nach einem der vorhergehenden Ansprüche, wobei während der vorbestimmten Zeitspanne im Wesentlichen kein weiteres Gemisch auf das eine oder die mehreren Fenster ausgegeben wird.

11. Verfahren nach einem der vorhergehenden Ansprüche, wobei das heiße Wasser und das Gemisch der Kammer über separate Spülkanäle zugeführt werden, wobei der Spülkanal für das heiße Wasser einen größeren Innendurchmesser als der Spülkanal für das Gemisch hat.

12. System zur Inline-Messung einer optischen Eigenschaft einer Flüssigkeit, wobei das System aufweist:
eine Durchflusszelle (60), die eine Kammer (61) mit einem Einlass (62) und einem Auslass (63) für die Flüssigkeit aufweist,
einen optischen Sensor (50) mit wenigstens einem im Wesentlichen transparenten Fenster (51, 52), das in der Kammer (61) angeordnet ist, wobei der Sensor zum Erfassen einer optischen Eigenschaft der durch die Kammer fließenden Flüssigkeit ausgestaltet ist und wobei das wenigstens eine im Wesentlichen transparente Fenster (51, 52) so angeordnet ist, um eine Lichtquelle (53) und/oder einen Lichtdetektor des Sensors auf Abstand zu der durch die Durchflusszelle (60) fließenden Flüssigkeit zu halten, und
einen oder mehrere Spülkanäle (56, 57), die in die Kammer münden, wobei ein erster Spülkanal (56) des einen oder der der mehreren Spülkanäle an einer Position in die Kammer mündet, die dem wenigstens einen im Wesentlichen transparenten Fenster (51, 52) zugewandt ist,
**dadurch gekennzeichnet, dass** das System weiterhin aufweist:
eine Quelle (24) für Druckluft, die über eine Leitung (44) selektiv mit dem ersten Spülkanal (56) verbindbar ist,
einen Reinigungsflüssigkeit-Ausgabeapparat (24, 4; 25, 5), der zur Ausgabe einer Menge von Reinigungsflüssigkeit in die Leitung (44) eingerichtet ist,
eine oder mehrere Einlassleitungen (31, 32), die mit dem Einlass der Durchflusszelle (60) verbunden sind,
ein oder mehrere steuerbare Einlassventile (1, 2), die dazu eingerichtet sind, den Durchfluss von Flüssigkeit, deren optische Eigenschaft zu messen ist, aus der einen oder den mehreren Einlassleitungen (31, 32) in die Durchflusszelle zu erlauben oder zu blockieren,
eine erste Abflussleitung (35), die mit dem Auslass der Durchflusszelle verbunden ist und zum Transport von Flüssigkeit aus der Durchflusszelle heraus aus dem System eingerichtet ist,
eine Steuereinheit (70) zum Umschalten des Systems zwischen einem Inline-Messmodus und einer Reinigungssequenz, wobei die Steuereinheit dazu eingerichtet ist,
um, wenn sie in den Inline-Messmodus schaltet, wenigstens eines der Einlassventile (1, 2) zu öffnen, um Flüssigkeit von einer der einen oder mehreren Einlassleitungen (31, 32) durch den Einlass der Durchflusszelle und vorbei an wenigstens einem transparenten Fenster fließen zu lassen und danach durch die erste Abflussleitung (35) fließen zu lassen, um die Inline-Messung der optischen Eigenschaft der Flüssigkeit unter Verwendung des optischen Sensors zu ermöglichen,
um, wenn sie in die Reinigungssequenz schaltet, alle des wenigstens einen Einlassventils (1, 2) zu schließen, die Quelle für Druckluft zu steuern, um Druckluft mit dem ersten Luftdruck (P1) in die Kammer einzuführen, um die Kammer im Wesentlichen zu entleeren, den Reinigungsflüssigkeits-Ausgabeapparat dazu anzusteuern, um danach eine Menge von Reinigungsflüssigkeit in die Leitung (44) auszugeben, und die Quelle für Druckluft dazu anzusteuern, um Druckluft auf dem zweiten Luftdruck (P2) zuzuführen, um die Reinigungsflüssigkeit in der Leitung (44) zum Verdampfen zu bringen, um ein Reinigungsflüssigkeit/Druckluft-Gemisch zu erhalten und das Gemisch der Kammer (61) auf das eine oder die mehreren Fenster zuzuführen, wobei der zweite Luftdruck (P2) größer als Umgebungsdruck ist und wenigstens zweimal kleiner als der erste Luftdruck (P1) ist.

13. System nach Anspruch 12, das weiterhin eine Heißwasserzufuhr zum Zuführen von heißem Wasser mit einer Temperatur von wenigstens 80°C aufweist, wobei die Steuereinheit weiter dazu eingerichtet ist, während der Reinigungssequenz und nach der Zufuhr des Gemischs auf das eine oder die mehreren Fenster,
die verdampfte Reinigungsflüssigkeit (C) auf das eine oder die mehreren Fenster (51, 52) des optischen Sensors (50) für wenigstens eine vorbestimmte Zeit einwirken zu lassen, und
die Kammer (60) mit heißem Wasser aus der Heißwasserzufuhr zu spülen, das der Kammer über einen zweiten Spülkanal (57) von dem einen oder den mehreren Spülkanälen zugeführt wird.

14. System nach Anspruch 12 oder 13, wobei der Sensor ein optisches Spektrometer (50) ist, das in der Durchflusszelle (60) angeordnet ist, wobei das eine oder die mehreren Fenster in dem Gehäuse ein übertragendes Fenster (51) und auf Abstand entlang einer spezifizierten Weglänge zu dem übertragenden Fenster (51) ein aufnehmendes Fenster (52) aufweist, so dass von der Lichtquelle emittiertes Licht durch das übertragende Fenster, durch die zu untersuchende Flüssigkeit und durch das aufnehmende Fenster (52) des Detektor passieren kann, und wobei der erste Spülkanal (56) in die Kammer mündet und dem übertragenden Fenster (51) und/oder dem aufnehmenden Fenster (52) zugewandt ist.

15. System nach einem der Ansprüche 12-14, weiterhin mit einer zweiten Abflussleitung (36), die mit der ersten Abflussleitung (35) und dem Einlass der Durchflusszelle verbunden ist, wobei ein Abflussventil (3) zwischen dem Einlass der Durchflusszelle und der zweiten Abflussleitung angeordnet ist und wobei die Steuereinheit dazu eingerichtet ist, das Abflussventil zu schließen, wenn sie in den Messmodus schaltet, und das Abflussventil zu öffnen, wenn sie in die Reinigungssequenz schaltet.

## Revendications

1. Procédé de nettoyage d'un capteur optique en ligne (50) dans un système (20) qui comprend :
une cellule d'écoulement (60) comprenant une chambre (61) avec une entrée (62) et une sortie (63) ;
un ou plusieurs canaux de rinçage (56, 57) qui débouchent dans la chambre ;
dans lequel le capteur (50) comprend une ou plusieurs fenêtres sensiblement transparentes (51, 52) agencées dans la chambre (61), le capteur étant agencé pour détecter une propriété optique d'un liquide s'écoulant à travers la chambre, les une ou plusieurs fenêtres sensiblement transparentes (51, 52) étant agencées pour espacer une source de lumière (53) et/ou un détecteur de lumière (54) du capteur à l'écart du liquide s'écoulant à travers la cellule d'écoulement (60) ;
**caractérisé en ce que** le procédé comprend les étapes consistant à :
bloquer (200) l'écoulement de liquide à travers l'entrée (62) jusque dans la chambre (61) ;
alimenter (201) de l'air pressurisé à une première pression d'air (P1) vers la chambre pour vider sensiblement le liquide hors de la chambre ; et
distribuer (202) une quantité de liquide de nettoyage, et utiliser de l'air pressurisé à une deuxième pression d'air (P2), vaporiser (203) ladite quantité de liquide de nettoyage pour obtenir un mélange de liquide de nettoyage/air pressurisé et délivrer ledit mélange par l'intermédiaire des un ou plusieurs canaux de rinçage jusque sur les une ou plusieurs fenêtres (51, 52) dans la chambre ;
dans lequel la deuxième pression d'air (P2) est supérieure à la pression ambiante et au moins deux fois inférieure à la première pression d'air (P1) ;
laisser (204) le liquide de nettoyage provenant du mélange agir sur les une ou plusieurs fenêtres sur lesquelles le mélange a été distribué, pendant au moins une durée prédéterminée ; et
rincer (205) la chambre (60) avec de l'eau chaude qui a une température d'au moins 80 degrés Celsius.

2. Procédé selon la revendication 1, dans lequel la chambre de la cellule d'écoulement (60) a un volume interne pour le liquide (L) dont la propriété optique doit être mesurée, dans lequel la quantité de liquide de nettoyage qui est distribuée a un volume inférieur à un tiers du volume interne de la chambre, de préférence entre un cinquième et un vingtième du volume interne.

3. Procédé selon la revendication 1 ou 2, dans lequel la quantité de liquide de nettoyage qui est distribuée pour être vaporisée afin d'obtenir le mélange de liquide de nettoyage/air pressurisé a un volume inférieur à 10 ml, de préférence de 5 ml ou moins, plus préférablement entre 1 et 3 ml.

4. Procédé selon la revendication 1, 2 ou 3, dans lequel la deuxième pression d'air (P2) est au moins quatre fois plus petite que la première pression d'air (P1), de préférence au moins cinq fois plus petite.

5. Procédé selon l'une quelconque des revendications précédentes, dans lequel le mélange qui est délivré dans la chambre contient une plus grande quantité d'air en poids que le liquide de nettoyage, de préférence dans lequel le mélange qui est délivré dans la chambre a un rapport en poids de l'air pressurisé au liquide de nettoyage de 3:2 ou moins.

6. Procédé selon l'une quelconque des revendications précédentes, comprenant, pendant l'étape de rinçage de la chambre avec de l'eau chaude, une alimentation d'air pressurisé à une troisième pression d'air vers la chambre, dans lequel la troisième pression d'air est au moins deux fois supérieure à la deuxième pression d'air.

7. Procédé selon l'une quelconque des revendications précédentes, dans lequel le capteur est un spectromètre optique comprenant un boîtier (55), une source de lumière (53) et un détecteur de lumière (54) agencés à l'intérieur du boîtier, dans lequel les une ou plusieurs fenêtres comprennent une fenêtre d'émission (51) et une fenêtre de réception (52) qui sont agencées dans le boîtier et dans lequel la fenêtre de réception est espacée de la fenêtre d'émission le long d'une longueur de trajet spécifiée (d) de telle sorte que de la lumière émise par la source de lumière peut passer à travers les fenêtres d'émission, à travers le liquide à examiner et à travers une fenêtre de réception (52) vers le détecteur (54).

8. Procédé selon l'une quelconque des revendications précédentes, dans lequel les un ou plusieurs canaux de rinçage comprennent un premier canal de rinçage (56) qui débouche dans la chambre dans une position faisant face à au moins une des une ou plusieurs fenêtres (51, 52) pour diriger le mélange et/ou l'air pressurisé à la première pression d'air jusque sur les une ou plusieurs fenêtres,
de préférence dans lequel les un ou plusieurs canaux de rinçage comprennent un second canal de rinçage, séparé du premier canal de rinçage, dans lequel le second canal de rinçage débouche dans la chambre pour alimenter l'eau chaude à la chambre.

9. Procédé selon l'une quelconque des revendications précédentes, dans lequel pendant que le liquide est vidé hors de la chambre, la délivrance du mélange à la chambre et le rinçage de la chambre avec de l'eau chaude, la cellule d'écoulement reste dans une même position par rapport au capteur que lorsque le liquide à mesurer s'écoule à travers la chambre.

10. Procédé selon l'une quelconque des revendications précédentes, dans lequel pendant la durée prédéterminée, sensiblement aucun autre mélange n'est distribué sur les une ou plusieurs fenêtres.

11. Procédé selon l'une quelconque des revendications précédentes, dans lequel l'eau chaude et le mélange sont fournis à la chambre par l'intermédiaire de canaux de rinçage séparés, dans lequel le canal de rinçage pour l'eau chaude a un diamètre intérieur plus grand que le canal de rinçage pour le mélange.

12. Système (20) pour la mesure en ligne d'une propriété optique d'un liquide, le système comprenant :
une cellule d'écoulement (60) comprenant une chambre (61) avec une entrée (62) et une sortie (63) pour le liquide ;
un capteur optique (50) comprenant au moins une fenêtre sensiblement transparente (51, 52) qui est agencée dans la chambre (61), le capteur étant agencé pour détecter une propriété optique du liquide s'écoulant à travers la chambre et dans lequel ladite au moins une fenêtre sensiblement transparente (51, 52) est agencée pour espacer une source de lumière (53) et/ou un détecteur de lumière (54) du capteur à l'écart du liquide s'écoulant à travers la cellule d'écoulement (60) ; et
un ou plusieurs canaux de rinçage (56, 57) qui débouchent dans la chambre, dans lequel un premier canal de rinçage (56) desdits un ou plusieurs canaux de rinçage débouche dans la chambre dans une position faisant face à la au moins une fenêtre sensiblement transparente (51, 52) ;
**caractérisé en ce que** le système comprend en outre :
une source (24) d'air pressurisé, pouvant être reliée sélectivement audit premier canal de rinçage (56) par l'intermédiaire d'un conduit (44) ;
un appareil de distribution de liquide de nettoyage (24, 4 ; 25, 5) agencé pour distribuer une quantité de liquide de nettoyage dans le conduit (44),
un ou plusieurs conduits d'entrée (31, 32) connectés à l'entrée de la cellule d'écoulement (60) ;
une ou plusieurs vannes d'entrée pouvant être commandées (1, 2) agencées pour permettre ou bloquer un écoulement de liquide dont la propriété optique doit être mesurée à partir des un ou plusieurs conduits d'entrée (31, 32) jusque dans la cellule d'écoulement ;
un premier conduit de drainage (35) connecté à la sortie de la cellule d'écoulement et agencé pour un transport de liquide depuis la cellule d'écoulement vers l'extérieur du système ;
un dispositif de commande (70) pour commuter le système entre un mode de mesure en ligne et une séquence de nettoyage, le dispositif de commande étant adapté pour :
lors d'un passage au mode de mesure en ligne, commander l'ouverture d'au moins une desdites vannes d'entrée (1, 2) pour permettre à du liquide de s'écouler à partir d'un desdits un ou plusieurs conduits d'entrée (31, 32), à travers l'entrée de la cellule d'écoulement et au-delà de ladite au moins une fenêtre transparente, et par la suite à travers le premier conduit de drainage (35), pour permettre une mesure en ligne de la propriété optique du liquide à l'aide du capteur optique ;
lors du passage à la séquence de nettoyage, commander une fermeture de la totalité des au moins une vannes d'entrée (1, 2), commander la source d'air pressurisé pour fournir de l'air pressurisé à une première pression (P1) à la chambre afin de drainer sensiblement la chambre, commander l'appareil de distribution de liquide de nettoyage pour distribuer ultérieurement une quantité de liquide de nettoyage dans le conduit (44), et commander la source d'air pressurisé pour fournir de l'air pressurisé à une deuxième pression d'air (P2) pour vaporiser le liquide de nettoyage dans le conduit (44) afin d'obtenir un mélange de liquide de nettoyage/air pressurisé et délivrer le mélange vers la chambre (61) jusque sur une ou plusieurs fenêtres, dans lequel la deuxième pression d'air (P2) est supérieure à la pression ambiante et au moins deux fois inférieure à la première pression d'air (P1).

13. Système selon la revendication 12, comprenant en outre une alimentation en eau chaude pour alimenter de l'eau chaude à une température d'au moins 80 degrés Celsius, dans lequel le dispositif de commande est en outre adapté pour, pendant la séquence de nettoyage et après la délivrance du mélange jusque sur les une ou plusieurs fenêtres :
laisser le liquide de nettoyage vaporisé (C) agir sur les une ou plusieurs fenêtres (51, 52) du capteur optique (50) pendant au moins une durée prédéterminée ; et
rincer la chambre (60) avec de l'eau chaude provenant de l'alimentation en eau chaude qui est délivrée à la chambre par l'intermédiaire d'un second canal de rinçage (57) desdits un ou plusieurs canaux de rinçage.

14. Système selon la revendication 12 ou 13, dans lequel le capteur est un spectromètre optique (50) agencé dans la cellule d'écoulement (60), dans lequel les une ou plusieurs fenêtres dans le boîtier comprennent une fenêtre d'émission (51) et une fenêtre de réception (52) espacées de la fenêtre d'émission (51) le long d'une longueur de trajet spécifiée (d) de telle sorte que de la lumière émise par la source de lumière peut passer à travers la fenêtre d'émission, à travers le liquide à examiner et à travers la fenêtre de réception (52) vers le détecteur, et dans lequel le premier canal de rinçage (56) débouche dans la chambre et fait face à la fenêtre d'émission (51) et/ou à la fenêtre de réception (52).

15. Système selon l'une quelconque des revendications 12 à 14, comprenant en outre un second conduit de drainage (36) relié au premier conduit de drainage (35) et à l'entrée de la cellule d'écoulement, dans lequel une vanne de drainage (3) est agencée entre l'entrée de la cellule d'écoulement et le second conduit de vidange, et dans lequel le dispositif de commande est adapté pour fermer la vanne de drainage lors du passage au mode de mesure, et pour ouvrir la vanne de drainage lors du passage à la séquence de nettoyage.
